# EUROPÄISCHE PATENTSCHRIFT

(11) **EP 2 638 793 B1**
(45) Veröffentlichungstag und Bekanntmachung des Hinweises auf die Patenterteilung: **09.08.2017**
(21) Anmeldenummer: 13401023.0
(22) Anmeldetag: 11.03.2013
(51) Int. Cl.: A01B 73/00, A01B 76/00

(54) **Abstellvorrichtung für eine Dreipunktanbaumaschine**
Abstellvorrichtung für eine Dreipunktanbaumaschine
Dispositif de stationnement pour une machine de montage à trois points

(30) Priorität: 16.03.2012 DE 102012102224
(43) Veröffentlichungstag der Anmeldung: 18.09.2013
(73) Patentinhaber: Amazonen-Werke H. Dreyer GmbH & Co. KG, 49205 Hasbergen (DE)
(72) Erfinder: Johannaber, Stefan Jan, 49536 Lienen (DE); Walter, Achim, 49078 Osnabrück (DE)

(56) Entgegenhaltungen:
- EP-A2- 2 191 707
- DE-A1- 2 447 982
- DE-A1- 3 731 208
- US-B1- 6 698 060

## Beschreibung

Die Erfindung betrifft eine Dreipunktanbaumaschine mit einer Abstellvorrichtung gemäß dem Oberbegriff des Patentanspruches 1.

Eine derartige Abstellvorrichtung für eine Dreipunktanbaumaschine ist in der EP 2 191 707 A2 beschrieben. Die Laufräder sind über Drehlager an den Halterungen der Abstellstützen befestigt. Wenn die Abstellstützen sich in Nichtabstellposition befinden, fallen Düngerpartikel auf die sich in liegender Position befindlichen Laufräder und bleiben auf den Felgen der Laufräder sowie im Bereich der Drehlager der Laufräder in nachteiliger Weise liegen. Weiterhin drehen sich die Laufräder, wenn der Bediener der Maschine mit einem Fuß auf die Laufräder tritt, um die Abstellvorrichtung zu verstellen. Aufgrund der Drehung der Laufräder besteht dann eine relativ hohe Verletzungsgefahr für den Bediener.

Der Erfindung liegt die Aufgabe zu Grunde, in einfacher Weise die Anordnung der Laufräder an der Abstellvorrichtung unter Vermeidung der bestehenden Nachteile zu verbessern.

Diese Aufgabe wird durch die Merkmale des Kennzeichens von Anspruch 1 gelöst.

Infolge dieser Maßnahmen wird durch die Abdeckplatte eine seitliche Abdeckung der Laufräder erreicht, so dass die Abdeckplatte verhindert, dass Düngerpartikel sich unmittelbar auf der Felge des Laufrades oder im Bereich der Drehlagerung des Laufrades anhäufen können. Weiterhin dient die Abdeckplatte dem Unfallschutz, wenn der Bediener mit dem Fuß die Abstellstützen verstellen will, indem er auf das Laufrad tritt und die Abstellstützen verdreht. In diesem Falle tritt er auf die an der Halterung der Drehlagerung des Laufrades festgesetzte Abdeckplatte und verschwenkt so die Abstellstützen.

Eine sehr einfache Festsetzung der Abdeckplatte an der Halterung lässt sich dadurch erreichen, dass die Abdeckplatte eine Aussparung aufweist, die der Form der Halterung zur Befestigung der Lagerung der Laufräder aufweist, dass die Halterung in die Aussparung zumindest annähernd formschlüssig eingreifend angeordnet und/oder ausgestaltet ist. Somit ist die Abdeckplatte drehgesichert an der Halterung angeordnet. Damit der Fuß des Bedieners beim Verstellen der Abstellstützen festen Halt auf der Abdeckplatte hat, ist vorgesehen, dass die Abdeckplatte zumindest im unteren Außenbereich einen rutschfesten Bereich aufweist.

Um zu verhindern, dass Düngerpartikel oder andere Partikel zwischen Abdeckplatte und Laufrad gelangen können, ist vorgesehen, dass an der Abdeckplatte auf der dem Laufrad zugewandten Seite zumindest ein zumindest annähernd an die Außenseite des Laufrades anliegende zumindest annähernd umlaufendes, zumindest annähernd kreisförmiges Dichtelement angeordnet ist.

Weiterhin mit Elementen Schutz für eine Abdeckplatte für Laufräder nach zumindest einem der Ansprüche 1 bis 6 beansprucht.

Weitere Einzelheiten der Erfindung sind der Beispielsbeschreibung und den Zeichnungen zu entnehmen. Hierbei zeigen
- Fig. 1: der untere Teil des Rahmens einer Verteilmaschine in der Seitenansicht mit Abstellstützen in der Abstellposition,
- Fig. 2: der untere Teil des Rahmens einer Verteilmaschine mit Abstellstützen in der Abstellposition in der Ansicht von hinten,
- Fig. 3: der untere Teil des Rahmens einer Verteilmaschine mit Abstellstützen in der Nichtabstellposition in der Ansicht von hinten,
- Fig. 4: die Abstellstütze der in Fahrtrichtung gesehen linken Seite in Abstellposition in vergrößerter Darstellung und vergrößertem Maßstab in perspektivischer Darstellung,

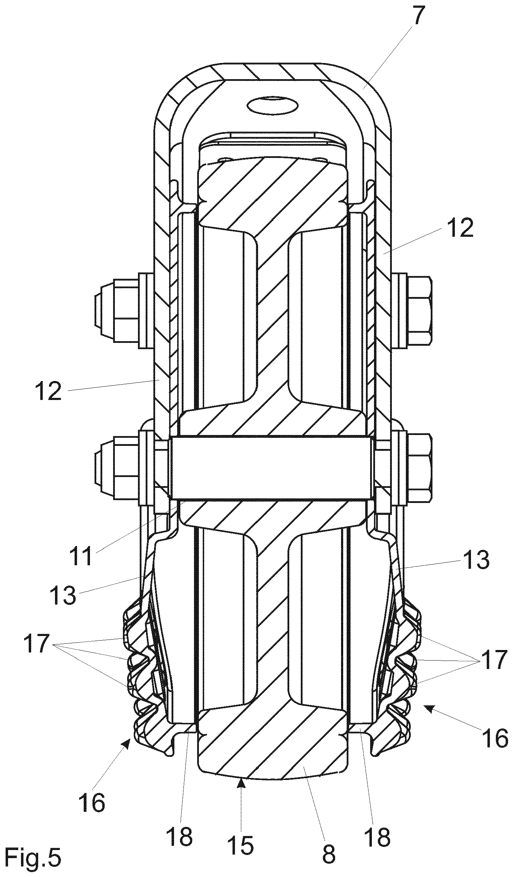

- Fig. 5: die Abstellstütze gemäß Fig.4 im Schnitt V - V und

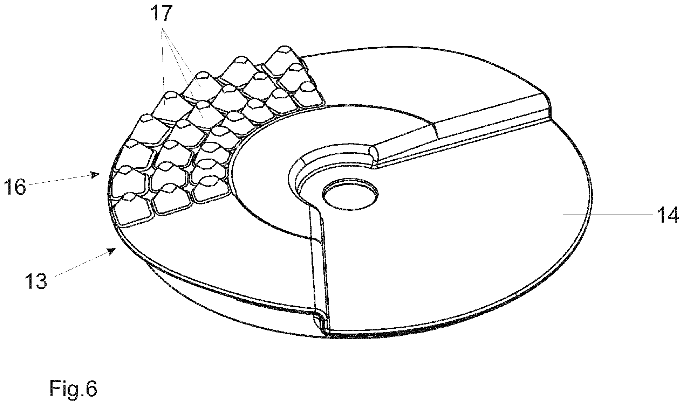

- Fig. 6: die Abdeckscheibe in perspektivischer Darstellung.

Die Verteilmaschine ist als Zentrifugaldüngerstreuer ausgebildet. Der Zentrifugaldüngerstreuer weist den nicht dargestellten Vorratsbehälter, den Rahmen 1 sowie die nicht dargestellte als Scheibenstreuwerk ausgebildete Verteileinrichtung auf. Im unteren Bereich des Vorratsbehälters ist in nicht dargestellter und bekannter Weise eine einstellbare Dosiereinrichtung, die als mit einem Schieber in ihrer Öffnungsweite einstellbare Auslauföffnung ausgebildet ist, angeordnet. Über die Dosiereinrichtung wird das sich im Vorratsbehälter befindliche Material, beispielsweise Dünger, dem Zentrifugalstreuwerk in einstellbaren Mengen zugeführt.

An dem Rahmen 1 sind auf der Vorderseite die Dreipunktkupplungselemente 2 angeordnet, über welche die Verteilmaschine an den Dreipunktkraftheber eines Schleppers in bekannter Weise anzukuppeln ist.

Beidseitig des Rahmens 1 sind Abstellstützen 3 angeordnet, wobei nur die in Fahrtrichtung 4 linke Abstellstütze 3 dargestellt ist.

Die Abstellstützen 3 weisen jeweils einen in Fahrtrichtung 4 verlaufenden Rohrträger 5 auf, an dessen vorderen Ende die um eine aufrechte Achse verschwenkbaren Lenkrolle 6 und auf der Rückseite über einen Tragarm 7 die Laufrolle 8 angeordnet ist.

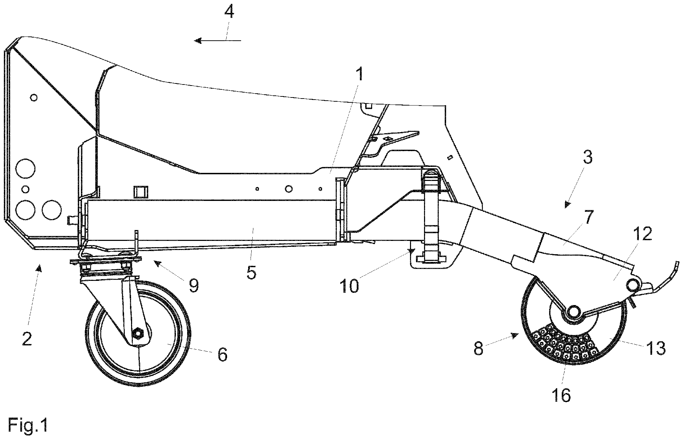

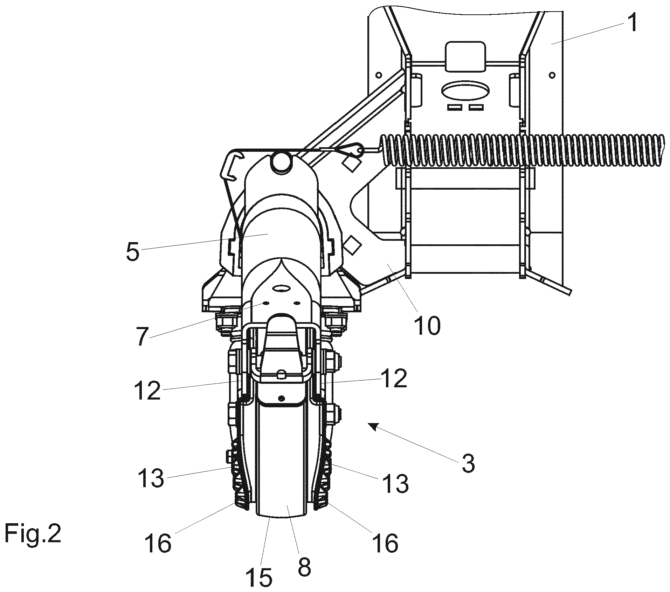

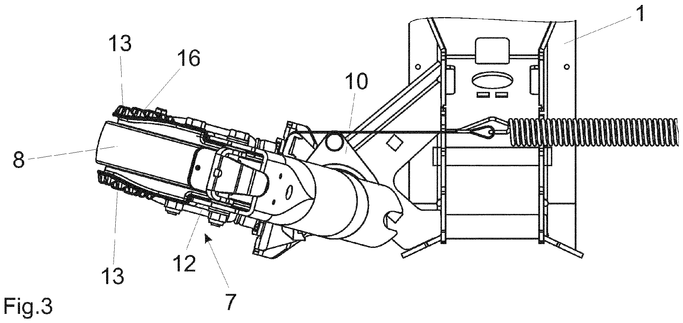

Der rohrförmige Träger 5 der Abstellstütze 3 ist mittels der vorderen und der hinteren Gelenkhalterungen 9 und 10 am Rahmen 1 der Verteilmaschine angeordnet. Zur sicheren Befestigung und Anordnung der Abstellstützen 3 sind die beiden Gelenkhalterungen 9 und 10 beabstandet zueinander angeordnet. Die Abstellstützen 3 sind über das rohrförmige Tragrohr und die Gelenke der Gelenkhalterungen 9 und 10, um eine in Fahrtrichtung 4 verlaufende Gelenkachse von der in den Fig. 1 und 2 dargestellten Abstellposition in die in den Fig. 3 dargestellte nach oben geklappte Nichtabstellposition bringbar.

Die hintere als Laufrad ausgebildete Laufrolle 8 ist mittels einer Drehlagerung 11 an der Halterung 12 des Tragarmes 7 befestigt. Im Bereich des hinteren Laufrades 8 ist jeweils auf beiden Seiten seitlich des Laufrades 8 eine Abdeckplatte 13 an der Halterung 12 angeordnet.

Die Abdeckplatte 13 weist eine Aussparung 14, die als sektorförmige Vertiefung ausgebildet ist, auf. Diese sektorförmige Vertiefung 14 weist zumindest annähernd die Form der Halterung 12 zur Befestigung der Lagerung 11 der Laufräder 8 auf, wie die Zeichnungen zeigen. Somit ist die Halterung 12 in die Aussparung 14 zumindest annähernd formschlüssig eingreifend angeordnet und ausgestaltet. Die Aussparung, nämlich die sektorförmige Vertiefung 14 ist an die Form der Halterung 13 angepasst ausgestaltet. Durch diesen Formschluss zwischen der Abdeckplatte 13 unter der Halterung 12 ist die jeweilige Abdeckplatte an der Abstellstützen oder der an der Abstellstütze 7 angeordneten Halterung 12 festgesetzt angeordnet.

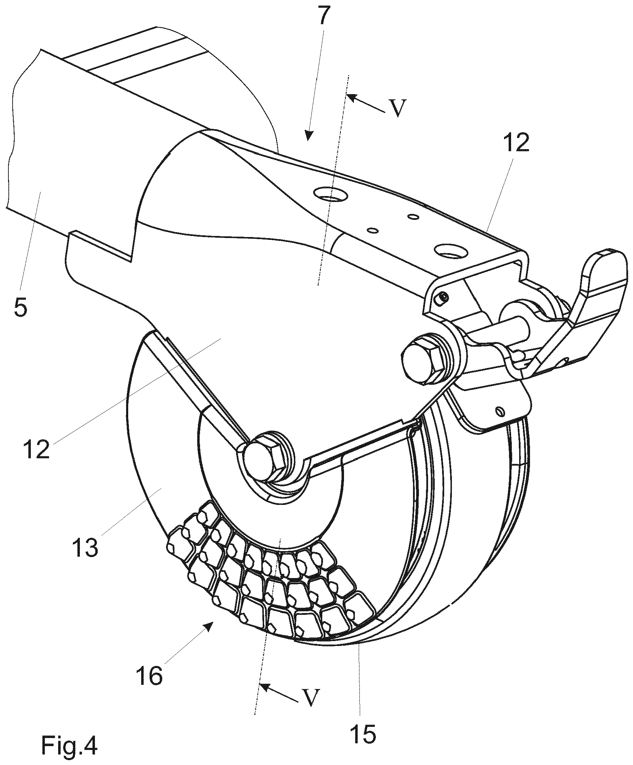

Die Abdeckplatte 13 ist in der Nichtabstellposition auf der nach oben weisenden Seite der Laufräder 8 angeordnet und deckt neben dem inneren Bereich des Laufrades 8 auch den äußeren Bereich des Laufrades 8 ab, wie insbesondere Fig.4 zeigt. Die Abdeckplatte 13 überragt zumindest in dem Aufstandsbereich 15 des jeweiligen Laufrades 8 in der Abstellposition der Abstellstützen 7 den Außenumfang des Laufrades 8 im Aufstandsbereich 15 des Laufrades 8 nicht, wie die Zeichnungen zeigen.

Weiterhin weist die Abdeckplatte 13 zumindest im unteren Außenbereich den rutschfesten Bereich 16 auf, der durch die noppenartigen Erhebungen 17 gebildet wird.

Um die Abstellstützen 7 aus der in der Fig. 3 dargestellten Nichtabstellposition in die in den Fig. 1 und 2 dargestellte Abstellposition zu bringen, kann der Bediener der Maschine auf die Abdeckplatte 13 im rutschfesten Bereich 16 treten um die Abstellstütze 7 zu verschwenken. Dadurch, dass die Abdeckplatte 13 an der Halterung 12 festgesetzt ist, ist ein sicheres Verstellen der Abstellstütze 7 möglich.

Um zu verhindern, dass Düngerpartikel oder andere Artikel zwischen Abdeckplatte 13 und Laufrad 8 gelangen können, ist an der Abdeckplatte 13 auf der dem Laufrad 8 zugewandten Seite zumindest ein zumindest annähernd an der Außenseite des Laufrades 8 anliegendes zumindest annähernd umlaufendes, zumindest annähernd kreisförmiges Dichtelement 18 angeordnet ist.

## Patentansprüche

1. Dreipunktanbaumaschine mit einer Abstellvorrichtung, insbesondere Verteilmaschine, wobei die Abstellvorrichtung jeweils im seitlichen Bereich der Maschine an deren Rahmen mittels einer Gelenkanordnung angeordnete und um eine in Fahrtrichtung verlaufende Gelenkachse zwischen einer Abstellposition und zumindest einer Nichtabstellposition verschwenkbare Abstellstützen aufweist, wobei zumindest an einigen der unteren Enden der Abstellstützen Halterungen mit daran drehbar angeordneten Laufrädern angeordnet sind, **dadurch gekennzeichnet, dass** zumindest auf der einen Seite des jeweiligen Laufrades (8) eine Abdeckplatte (13) an der Halterung (12) angeordnet ist, dass die jeweilige Abdeckplatte (13) auf der in der Nichtabstellposition nach oben weisenden Seite der Laufräder (8) angeordnet ist und deren inneren und äußeren Bereich abdeckt, dass die jeweilige Abdeckplatte (13) zumindest im dem Aufstandsbereich (15) des jeweiligen Laufrades (8) in der Abstellposition der Abstellstütze (7) den Außenumfang des Laufrades (8) im Aufstandsbereich (15) des Laufrades (8) nicht überragt.

2. Dreipunktanbaumaschine nach zumindest einem der vorstehenden Ansprüche, **dadurch gekennzeichnet, dass** die Abdeckplatte (13) eine Aussparung (14) aufweist, die der Form der Halterung (12) zur Befestigung der Lagerung (11) der Laufräder (8) aufweist, dass die Halterung (12) in die Aussparung (14) zumindest annähernd formschlüssig eingreifend angeordnet und/oder ausgestaltet ist.

3. Dreipunktanbaumaschine nach zumindest einem der vorstehenden Ansprüche, **dadurch gekennzeichnet, dass** die Abdeckplatte (13) zumindest im unteren Außenbereich einen rutschfesten Bereich (16, 17) aufweist.

4. Dreipunktanbaumaschine nach zumindest einem der vorstehenden Ansprüche, **dadurch gekennzeichnet, dass** an der Abdeckplatte (13) auf der dem Laufrad (8) zugewandten Seite zumindest ein zumindest annähernd an die Außenseite des Laufrades (8) anliegende zumindest annähernd umlaufendes, zumindest annähernd kreisförmiges Dichtelement (18) angeordnet ist.

## Claims

1. Three-point mounted machine with a set-down device, in particular spreader, wherein the set-down device has support legs which are each arranged in the lateral region of the machine, on the frame thereof, by means of a joint arrangement and are pivotable about a joint axis, which runs in the direction of travel, between a set-down position and at least one non-set-down position, wherein holders with running wheels arranged rotatably thereon are arranged at least at some of the lower ends of the support legs, **characterized in that** a cover plate (13) is arranged on the holder (12) at least on the one side of the respective running wheel (8), **in that** the respective cover plate (13) is arranged on that side of the running wheels (8) which faces upwards in the non-set-down position and covers the inner and outer region of said running wheels, **in that** the respective cover plate (13) at least in the contact region (15) of the respective running wheel (8) does not protrude over the outer circumference of the running wheel (8) in the contact region (15) of the running wheel (8) in the set-down position of the support leg (7).

2. Three-point mounted machine according to at least one of the preceding claims, **characterized in that** the cover plate (13) has a recess (14) which has of the shape of the holder (12) for fastening the bearing (11) of the running wheels (8), **in that** the holder (12) is arranged and/or configured so as at least approximately to engage in a form-fitting manner in the recess (14).

3. Three-point mounted machine according to at least one of the preceding claims, **characterized in that** the cover plate (13) has a slipproof region (16, 17) at least in the lower outer region.

4. Three-point mounted machine according to at least one of the preceding claims, **characterized in that** at least one at least approximately encircling, at least approximately circular sealing element (18) which at least approximately lies against the outer side of the running wheel (8) is arranged on the cover plate (13) on the side facing the running wheel (8).

## Revendications

1. Machine portée à trois points avec un dispositif de stationnement, en particulier machine de distribution, dans laquelle le dispositif de stationnement présente respectivement dans la région latérale de la machine des appuis de stationnement agencés sur son châssis au moyen d'un dispositif articulé et pouvant pivoter autour d'un axe d'articulation s'étendant dans la direction de marche entre une position de stationnement et au moins une position de non-stationnement, dans laquelle des supports avec des roues de roulement agencées de façon rotative sur ceux-ci sont disposés au moins à certaines des extrémités inférieures des appuis de stationnement, **caractérisée en ce qu'**une plaque de recouvrement (13) est disposée sur le support (12) au moins sur un côté de la roue de roulement respective (8), **en ce que** la plaque de recouvrement respective (13) est disposée sur le côté des roues de roulement (8) orienté vers le haut dans la position de non-stationnement et recouvre la région intérieure et extérieure de celles-ci, **en ce que** la plaque de recouvrement respective (13), au moins dans la région de contact (15) de la roue de roulement respective (8) dans la position de stationnement de l'appui de stationnement (7), ne dépasse pas le pourtour extérieur de la roue de roulement (8) dans la région de contact (15) de la roue de roulement (8).

2. Machine portée à trois points selon au moins une des revendications précédentes, **caractérisée en ce que** la plaque de recouvrement (13) présente une découpe (14), qui présente de la forme du support (12) pour la fixation des paliers (11) des roues de roulement (8), et **en ce que** le support (12) est disposé et/ou configuré de façon à s'engager au moins approximativement par emboîtement dans la découpe (14).

3. Machine portée à trois points selon au moins une des revendications précédentes, **caractérisée en ce que** la plaque de recouvrement (13) présente une région antidérapante (16, 17) au moins dans la région extérieure inférieure.

4. Machine portée à trois points selon au moins une des revendications précédentes, **caractérisée en ce qu'**au moins un élément d'étanchéité (18) au moins approximativement circulaire, au moins approximativement périphérique, appliqué au moins approximativement sur le côté extérieur de la roue de roulement (8), est disposé sur la plaque de recouvrement (13) sur le côté tourné vers la roue de roulement (8).
